(19) Europäisches Patentamt
European Patent Office
Office européen des brevets

(11) EP 2 930 464 B1

(12) **EUROPEAN PATENT SPECIFICATION**

(45) Date of publication and mention
of the grant of the patent:
**27.06.2018 Bulletin 2018/26**

(21) Application number: **13859860.2**

(22) Date of filing: **01.11.2013**

(51) Int Cl.:
**G01C 15/00** (2006.01)

(86) International application number:
**PCT/CN2013/001323**

(87) International publication number:
**WO 2014/086091 (12.06.2014 Gazette 2014/24)**

(54) **WINDOW MODULE, WINDOW AND LASER LINE PROJECTOR HAVING THE WINDOW**

FENSTERMODUL, FENSTER UND LASERLEITUNGSPROJEKTOR MIT DEM FENSTER

MODULE DE FENÊTRE, FENÊTRE ET PROJECTEUR DE LIGNE LASER AYANT LA FENÊTRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2012 CN 201210519298**

(43) Date of publication of application:
**14.10.2015 Bulletin 2015/42**

(73) Proprietor: **Changzhou Huada Kejie Opto-Electro Instrument CO., LTD.**
**Jiangsu 213023 (CN)**

(72) Inventors:
• **ZHANG, Ou**
**Changzhou**
**Jiangsu 213023 (CN)**
• **FEI, Kai**
**Changzhou**
**Jiangsu 213023 (CN)**

(74) Representative: **Ridderbusch, Oliver**
**Prisma IP**
**Patentanwaltskanzlei**
**Landshuter Allee 10**
**80637 München (DE)**

(56) References cited:
CN-U- 202 471 063        CN-U- 202 485 675
CN-U- 202 485 675        CN-U- 202 974 283
JP-A- 2001 124 556       JP-A- 2005 195 936
US-A1- 2002 178 595      US-A1- 2004 025 359
US-A1- 2007 271 800      US-B1- 6 282 028
US-B1- 6 938 350

**Description**

**Technical field**

The invention is related to a window module in a first aspect. A preferred embodiment of the invention is related to a window with the window module in a second aspect. A further preferred embodiment of the invention is related to a laser line projector with a window.

**Background of the Invention**

US 2004/0025359 A1 describes a laser line beam emitting apparatus with an optical broad element for broadening a laser beam flux.

According to US 6,938,350 B1 a light beam is split to project a reference plane.

CN 202485675 U shows a laser module with a laser device, a collimation device and a lens.

According to US 2002/0178595 A1 a laser line beam emitting apparatus is foreseen which provides reflected and refracted laser beams.

With the development of laser line projectors, the application thereof is expanding in different fields which means that the users' requirements become higher and higher respectively.

For example, laser line projectors which are able to emit a 360 degree laser popularize themselves in the application, i.e. the laser line covers the 360 degrees in a single plane. In previous common laser line projectors, achieving a 360 degree laser usually required arranging a laser module every 90 degrees. The diffusion angle between cross lines emitted by each of the laser modules is between 120 degrees and 150 degrees.

This means that at least four laser modules are required, causing such laser line projectors to occupy a huge space and have a high cost.

**Summary of the Invention**

The present invention provides an improved window for the laser line projector in order to overcome the above defects.

The present invention is related in a first aspect to a window module according to claim 1. A preferred embodiment of the invention is related in a second aspect to a window according to claim 2. A further preferred embodiment of the invention is related in a third aspect to a laser line projector according to claim 3. A further preferred embodiment of the invention is related in a fourth aspect to a laser line projector according to claim 4. The window module of present invention can eliminate more stray light compared with prior art based on the above arrangement so that the brightness of the horizontal laser light emitted by the laser line projector is even.

**Brief Description of the Drawings**

Figure 1 illustrates a schematic diagram of the window module in one embodiment of present invention;
Figure 2a illustrates the position of the first critical point in figure 1;

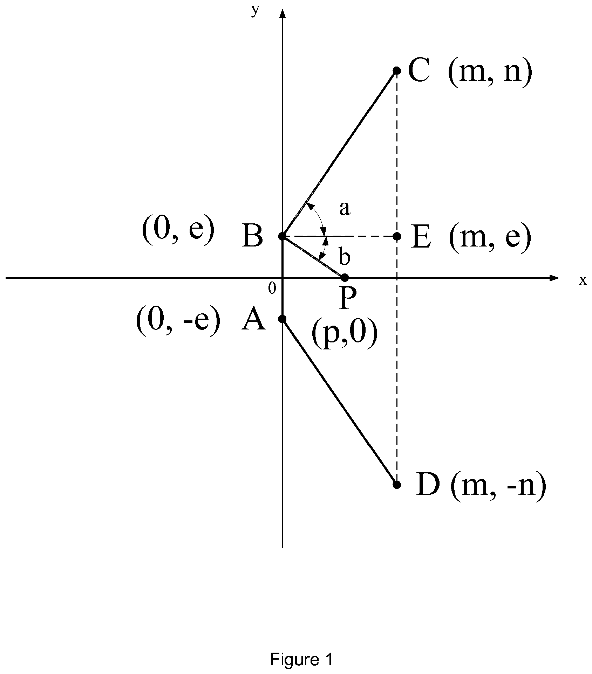

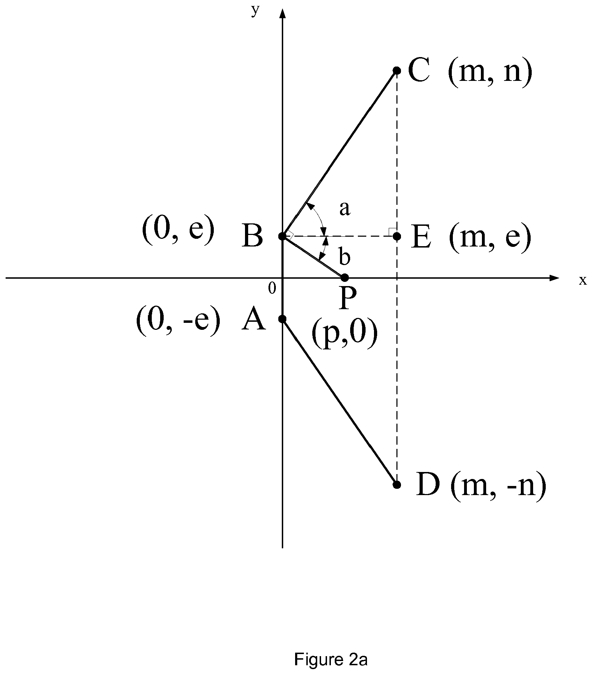

Figure 2a illustrates the position of the second critical point in figure 1;

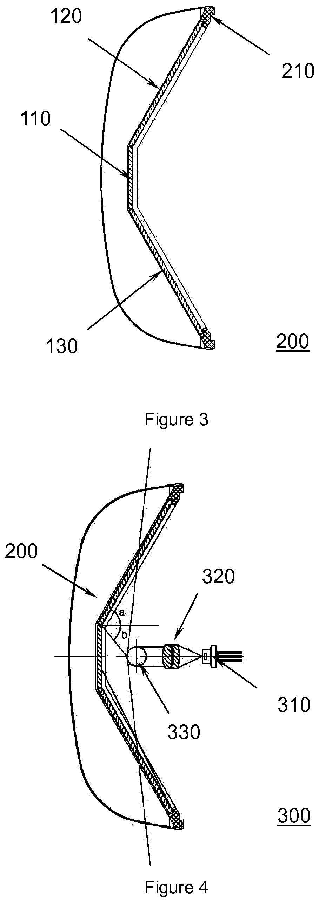

Figure 3 illustrates a schematic diagram of the window in one embodiment of the present invention;
Figure 4 illustrates a schematic diagram of the laser line projector in one embodiment of the present invention.

**Detailed Description of the Invention**

The advantages of the present invention will be detailed and described in reference to the drawings and the embodiments as follows:
Figure 1 illustrates a schematic diagram of the window module in one embodiment of present invention. The window module comprises a front window, a left window, and a right window on the same plane. In order to describe the relative relationship between these three windows, the present invention will be described based on the projections of the three windows on the same plane.

As shown in figure 1, the projection of front window on the plane is line segment AB, the projection of left window on the plane is line segment BC, and the projection of right window on the plane is line segment AD. These three line segments create an isosceles trapezoid ABCD, wherein line segment AB is the upper bottom of the isosceles trapezoid, the line segments BC and AD are the waist of the isosceles trapezoid, and the line segment CD is the lower bottom of isosceles trapezoid (as shown on dotted line).

A Cartesian coordinate system XoY is created as follows:

the midpoint O of line segment AB is the origin of the Cartesian coordinate system;
the direction of line segment OB acts in the positive direction of the Y-axis;
the direction that the perpendicular bisector of line segment AB extends towards line segment CD acts in the positive direction of the X-axis.

In the Cartesian coordinate system XoY, the coordinates of C point are (m, n), the coordinates of D point are (m, -n), E point is the projection of B point on the line segment CD whose coordinates are (m, e), the coordinates of B point are (0, e), the coordinates of A point are (0, -e). P point is the light source point whose coordinates are (p, 0), wherein m, n, e, p satisfy the conditions as follows:

$$m>0 \,,\, n>0,\, e>0,\, p>0,\, \text{and } 0<p<m.$$

The coordinate system is further defined that $\angle CBE$ is a and $\angle PBE$ is b, which both are acute angles. In order to implement the effect of eliminating stray light, a and b satisfy the conditions as follows:

$$a>b \text{ and } a+b>90°.$$

Considering O point is stationary and P point, as the light source point, is stationary as well in the Cartesian coordinate system XoY, C point and D point can be considered as the edge of the window, which are stationary as well. This means that the position of A point and B point will affect the layout of the whole window module. In other words, the value of e will affect the value of a directly and eliminate any stray lights that are caused by the window module.

In order to obtain the value range of a, two critical points can be archived according to above description.

The first critical point is shown in figure 2a. The first critical point satisfies that a plus b is 90(a+b=90). And triangle CBE is similar to triangle PBO ($\triangle CBE \sim \triangle PBO$). Therefore it can be understood that the proportion between OB and BE is equal to the proportion between OP and EC(OB/BE=OP/EC), i.e. $\dfrac{e}{m}=\dfrac{p}{n-e}$ so that an equation as follows can be obtained.

$$e=\frac{n-\sqrt{n^2-4pm}}{2}$$

Another equation as follows can be obtained after recursing the equation.

$$\tan(a)=\frac{2p}{n-\sqrt{n^2-4pm}} \qquad\qquad (1)$$

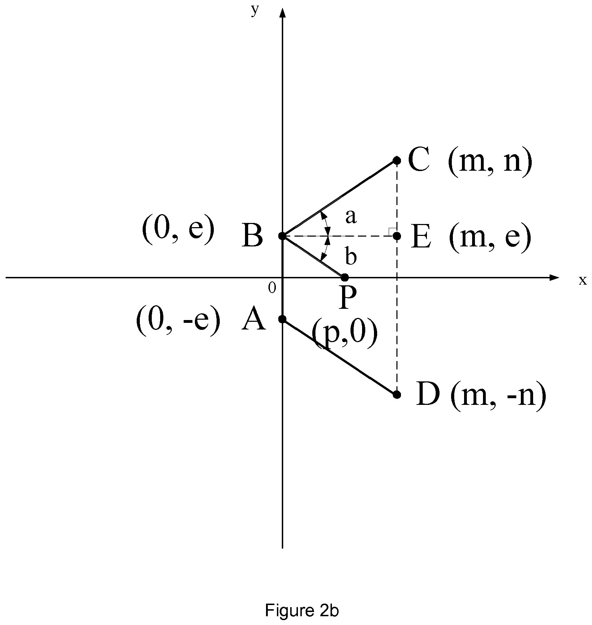

The second critical point is shown in figure 2b. The second critical point satisfies that a is equal to b(a=b). And triangle CBE is similar to triangle BPO ($\triangle CBE \sim \triangle BPO$). Therefore it can be understood that the proportion between OB and EC is equal to the proportion between OP and BE (OB/EC=OP/BE), i.e. $\dfrac{e}{n-e}=\dfrac{p}{m}$ so that an equation as follows can be obtained.

$$e=\frac{pn}{m+p}$$

Another equation as follows can be obtained after recursing the equation.

$$\tan(a) = \frac{n}{m+p} \qquad\qquad (2)$$

After merging equation (1) and equation (2), an inequality (3) showing the value range of a as follows can be obtained.

$$\frac{n}{m+p} < \tan(a) < \frac{2p}{n - \sqrt{n^2 - 4pm}} \qquad\qquad (3)$$

Based on above arrangement, the brightness of the horizontal laser light emitted by the laser line projector is even.

Figure 3 illustrates the schematic diagram of the window in one embodiment of the present invention. The window 200 comprises a window frame 210 and a window module mounted in the window frame 210, wherein the window module comprises a front window 110, a left window 120, and a right window 130.

Figure 4 illustrates the schematic diagram of the laser line projector in one embodiment of the present invention. The laser line projector 300 comprises a housing(not shown) and a hanging system(not shown), wherein, the hanging system comprises a laser 310, a collimation apparatus 320, and a cylindrical lens 330 with a high refractive index.

A window 200, as shown in figure 3, is provided in the housing. The laser light emitted by the lasers 310 enter the cylindrical lens 330 after being collimated by the collimation apparatus 320 and is diverged by the cylindrical lens 330 to form a laser light with a diffusion angle which is, approximately, more than 180°. The laser light is diverged outwardly through the window 200.

The hanging system is provided with another laser module in one embodiment of the present invention. These two laser modules are positioned on the same horizontal level and arranged relatively. The laser lights emitted by the two laser modules intersect to form a laser light with 360° diffusion angle.

## Claims

1. A window module, for a laser line projector comprising a light source point, comprising a front window (110), a left window (120), and a right window (130) lying on a same plane such that, the projection of the front window (110), left window (120) and right window (130) on the plane form an isosceles trapezoid,
the projection of the front window (110) is the upper bottom of the isosceles trapezoid, and the projection of the left window (120) and right window (130) is the waist of the isosceles trapezoid,
wherein the projection of the front window (110) on the plane is line segment AB, the projection of the left window (120) on the plane is line segment BC, and the projection of the right window (130) on the plane is line segment AD; a Cartesian coordinate system is created as follows:

- the midpoint O of line segment AB is the origin of the Cartesian coordinate system;
- the direction of line segment OB forms in the positive direction of the Y-axis;
- the direction that the perpendicular bisector of line segment AB extends towards point C or point D forms in the positive direction of the X-axis,

wherein the coordinates of point C are (m, n), the coordinates of point D are (m, -n), point E is the projection of point B on the line segment CD whose coordinates are (m, e), the coordinates of point B are (0, e), the coordinates of point A are (0, -e), point P is the light source point whose coordinates are (p, 0), wherein m, n, e, p satisfy the conditions as follows:
m>0, n>0, e>0, p>0, and 0<p<m; the coordinate system further defines that angle CBE is a and angle PBE is b, which are both acute angles, **characterized in that** a and b satisfy the conditions as follows:
a>b and a+b>90°, and

$$\frac{n}{m+p} < \tan(a) < \frac{2p}{n - \sqrt{n^2 - 4pm}} \ .$$

**2.** A window (200),
comprising a window frame (210) and window module according to claim 1 arranged in the window frame (210).

**3.** A laser line projector (300),
comprising a housing and a hanging system, wherein the housing comprises a window (200) according to claim 2,
wherein the hanging system comprises a laser module adapted to generate the light source point, said laser module comprising a laser (310), a collimation apparatus (320), and a cylindrical lens (330) with a high refractive index,
the laser light emitted by the laser (310) enters the cylindrical lens (330) after being collimated and is diverged by the cylindrical lens (330) to form at the light source point a laser light with a diffusion angle which is, approximately, more than 180°,
the laser light is diverged outwardly through the window (200).

**4.** A laser line projector (300) according to claim 3, wherein the hanging system is provided with another laser module, the two laser modules are positioned in the same horizontal level and arranged relatively, the laser lights emitted by the two laser modules intersect to form a laser light with a 360° diffusion angle.

**Patentansprüche**

**1.** Ein Fenstermodul für einen Laserlinienprojektor mit einem Lichtquellenpunkt, umfassend ein Frontfenster (110), ein linkes Fenster (120) und ein auf derselben Ebene liegendes rechtes Fenster (130),
so dass die Projektion des Frontfensters (110), des linken Fensters (120) und des rechten Fensters (130) auf die Ebene ein gleichschenkliges Trapez bildet, die Projektion des Frontfensters (110) der obere Boden des gleichschenkeligen Trapezoids ist und die Projektion des linken Fensters (120) und des rechten Fensters (130) die Taille des gleichschenkligen Trapezes ist,
wobei die Projektion des Frontfensters (110) auf die Ebene ein Liniensegment AB ist, die Projektion des linken Fensters (120) auf die Ebene ein Liniensegment BC ist und die Projektion des rechten Fensters (130) auf die Ebene ein Liniensegment AD ist;
ein kartesisches Koordinatensystem wie folgt gebildet wird:

- der Mittelpunkt O des Liniensegments AB ist der Ursprung des kartesischen Koordinatensystems;
- die Richtung des Liniensegments OB ist in positiver Richtung der y-Achse gebildet;
- die Richtung, in die sich die Mittelsenkrechte des Liniensegments AB zum Punkt C hin oder Punkt D hin erstreckt, ist in positiver Richtung der x-Achse gebildet,

wobei die Koordinaten des Punktes C (m, n) sind, die Koordinaten des Punktes D (m, - n) sind, Punkt E die Projektion des Punktes B auf das Liniensegment CD ist, dessen Koordinaten (m, e) sind, wobei die Koordinaten des Punktes B (0, e) sind, die Koordinaten des Punktes A (0, -e) sind, Punkt P der Lichtquellenpunkt ist, dessen Koordinaten (p, 0) sind, wobei m, n, e, p die folgenden Bedingungen erfüllen:
m>0, n>0, e>0, p>0 und 0<p<m; wobei das Koordinatensystem weiterhin definiert, dass der Winkel CBE a ist und der Winkel PBE b ist, welche beide spitze Winkel sind,
**dadurch gekennzeichnet,**
**dass** a und b die Bedingungen wie folgt erfüllen:
a>b und a+b>90° und

$$\frac{n}{m+p} < \tan(a) < \frac{2p}{n - \sqrt{n^2 - 4pm}} \ .$$

**2.** Ein Fenster (200)
mit einem Fensterrahmen (210) und einem Fenstermodul nach Anspruch 1, das im Fensterrahmen (210) angeordnet ist.

**3.** Ein Laserlinienprojektor (300)
umfassend ein Gehäuse und ein Hängesystem,
wobei das Gehäuse ein Fenster (200) nach Anspruch 2 umfasst,
wobei das Hängesystem ein Lasermodul umfasst, das zur Erzeugung des Lichtquellenpunkts eingerichtet ist, wobei das Lasermodul einen Laser (310), einen Kollimierungsapparat (320) und eine Zylinderlinse (330) mit hohem Brechungsindex aufweist,

wobei das vom Laser (310) emittierte Laserlicht in die Zylinderlinse (330) eintritt, nachdem es kollimiert worden ist, und durch die Zylinderlinse (330) divergiert wird, um am Lichtquellenpunkt ein Laserlicht mit einem Ausbreitungswinkel von ungefähr mehr als 180° zu bilden,

wobei das Laserlicht durch das Fenster (200) nach außen divergiert.

**4.** Ein Laserlinienprojektor (300) nach Anspruch 3,

wobei das Hängesystem mit einem weiteren Lasermodul ausgestattet ist, wobei die zwei Lasermodule auf demselben horizontalen Niveau angeordnet sind und relativ zueinander so angeordnet sind, dass die Laserlichter, die von den zwei Lasermodulen ausgesendet werden, sich schneiden, um ein Laserlicht mit einem 360°-Ausbreitungswinkel zu bilden.

**Revendications**

**1.** Un module de fenêtre pour un projecteur de ligne laser avec un point source de lumière,

comprenant une fenêtre avant (110), une fenêtre gauche (120) et une fenêtre droite (130) se trouvant au même plan, de sorte que

la projection de la fenêtre avant (110), de la fenêtre gauche (120) et de la fenêtre droite (130) sur le plan forme un trapèze isocèle,

la projection de la fenêtre avant (110) est le fond supérieur du trapèze isocèle et la projection de la fenêtre gauche (120) et de la fenêtre de droite (130) est la taille du trapèze isocèle,

tandis que la projection de la fenêtre avant (110) sur le plan est le segment de droite AB, la projection de la fenêtre gauche (120) sur le plan est le segment de droite BC et la projection de la fenêtre droite (130) sur le plan est le segment de droite AD,

un système de coordonnées cartésiennes est créé comme suit :

- le point médian O du segment de droite AB est l'origine du système de coordonnées cartésiennes,
- la direction du segment de droite OB se trouve dans la direction positive de l'axe y,
- la direction dans laquelle la médiatrice du segment de droite AB s'étend vers le point C ou le point D se trouve dans la direction positive de l'axe x,

tandis que les coordonnées du point C sont (m, n), les coordonnées du point D sont (m, -n), le point E est la projection du point B sur le segment de droite CD dont les coordonnées sont (m, e), tandis que les coordonnées du point B sont (0, e), les coordonnées du point A sont (0, -e), le point P est le point source de lumière dont les coordonnées sont (p, 0), tandis que m, n, e, p remplissent les conditions suivantes : m>0, n>0, e>0, p>0, et 0<p<m; le système de coordonnées définit en outre que l'angle CBE est a et que l'angle PBE est b, les deux angles étant des angles aigus,

**caractérisé en ce que**

a et b remplissent les conditions comme suit : a>b et a+b>90°, et

$$\frac{n}{m+p} < \tan(a) < \frac{2p}{n-\sqrt{n^2-4pm}} \,.$$

**2.** Une fenêtre (200)

avec un cadre de fenêtre (210) et un module de fenêtre selon la revendication 1 qui est agencé dans le cadre de fenêtre (210).

**3.** Un projecteur de ligne laser (300),

comprenant un boîtier et un système suspendu,

tandis que le boîtier comprend une fenêtre (200) selon la revendication 2, tandis que le système suspendu comprend un module laser adapté pour générer le point source de lumière, ledit module laser comprenant un laser (310), un appareil de collimation (320) et une lentille cylindrique (330) ayant un indice de réfraction élevé,

la lumière laser émise par le laser (310) entre dans la lentille cylindrique (330) après avoir été collimatée et est divergée par la lentille cylindrique (330) pour former au point source de lumière une lumière laser ayant un angle de diffusion d'approximativement plus de 180°,
la lumière laser est diverge vers l'extérieur au travers de la fenêtre (200).

4. Un projecteur de ligne laser (300) selon la revendication 3 tandis que
le système suspendu est équipé d'un autre module laser, tandis que les deux modules laser sont positionnés au même niveau horizontal et agencés relativement l'un à l'autre, de sorte que les lumières laser émises par les deux modules laser se croisent pour former une lumière laser avec un angle de diffusion de 360°.

Figure 1

Figure 2a

Figure 2b

120

210

110

130

200

Figure 3

200

320

310

330

300

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040025359 A1
- US 6938350 B1
- CN 202485675
- US 20020178595 A1